(19) Europäisches Patentamt
European Patent Office
Office européen des brevets

(11) EP 1 548 046 B1

(12) **EUROPEAN PATENT SPECIFICATION**

(45) Date of publication and mention of the grant of the patent:
**20.06.2007 Bulletin 2007/25**

(51) Int Cl.:
***C08G 63/688*** *(2006.01)* ***B29C 49/04*** *(2006.01)*
***B29C 49/00*** *(2006.01)* ***C08K 3/32*** *(2006.01)*

(21) Application number: **04022926.2**

(22) Date of filing: **07.02.2004**

(54) **Parison and rigid container made from an aromatic polyester composition, and process of making said container**

Vorformling und fester Behälter aus aromatischen Polyesterzusammensetzungen und Verfahren zur Herstellung von diesen Behältern

Paraison et récipient solide à base de compositions de polyester aromatique et procédé de fabrication de tels récipients

(84) Designated Contracting States:
**AT BE BG CH CY CZ DE DK EE ES FI FR GB GR HU IE IT LI LU MC NL PT RO SE SI SK TR**
Designated Extension States:
**LT**

(30) Priority: **22.12.2003 EP 03029269**

(43) Date of publication of application:
**29.06.2005 Bulletin 2005/26**

(62) Document number(s) of the earlier application(s) in accordance with Art. 76 EPC:
**04002752.6 / 1 550 681**

(73) Proprietor: **Amcor Limited**
**Abbotsford,**
**Victoria 3067 (AU)**

(72) Inventors:
- **Bayer, Uwe, Dr.**
  **86459 Gessertshausen (DE)**
- **Wehrmeister, Thomas, Dr.**
  **65428 Rüsselsheim (DE)**
- **Jansen, Cor**
  **5121 AW Rijen (NL)**
- **Krikor, Hilde**
  **2100 Deurne (BE)**
- **Windelinckx, Steve**
  **2980 Zoersel (BE)**

(74) Representative: **Matkowska, Franck et al**
**Matkowska & Associés**
**9 rue Jacques Prévert**
**59650 Villeneuve d'Ascq (FR)**

(56) References cited:
**EP-A- 0 909 774** **US-A- 4 209 606**
**US-A- 4 499 262** **US-A- 4 579 936**
**US-A- 5 608 032**

- **DATABASE WPI Section Ch, Week 199419 Derwent Publications Ltd., London, GB; Class A23, AN 1994-156262 XP002271123 & JP 06 099475 A (KURARAY CO LTD) 12 April 1994 (1994-04-12)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 548 046 B1

## Description

The present invention relates to an aromatic polyester composition for making biaxially stretched containers, especially stretch blow molded containers, with improved strain hardening. The polyester composition according to the invention comprises a sulfo-modified copolymer with a low DEG content. The invention further relates to a process for making containers especially with a low planar stretch ratio, and more especially to a process for making small volume containers. Compared to polyesters of the prior art, the polyester of the present invention exhibits superior stretching characteristics, such as a lower natural stretch ratio (NSR), which allows notably for production of small PET bottles via thinner and longer parisons. Such thinner and longer parisons improve the production of containers.

## Background of the Invention

Polyethylene terephthalate (PET) polymers are widely used in the packaging industry. PET has excellent mechanical properties as well as optical properties such as high transparency and a high barrier.

Meanwhile, biaxially oriented containers, e.g. bottles, made from PET are widely accepted by customers of the beverage industry. Common sizes for PET bottles range from 0.75 l to 2 l (common US sizes are 20 fl. oz. and 24 fl.oz.). Recently smaller beverage bottles (below 1 l, especially 0.6 l and below) have enjoyed increasing popularity. Such smaller bottles were manufactured from the same PET as the larger bottles, simply by using shorter and thicker parisons. Yet, there are disadvantages associated with the use of the same PET as for larger bottles and just miniaturized parisons.

For the production of beverage bottles, it is important that the polymer is well oriented during stretch-blow molding. Proper orientation results in uniform material distribution in most areas of the bottle and in good physical properties like gas barrier. In particular the production of small bottles with known commercial PET needs short parisons with a thick sidewall. This parison design is necessary in order to achieve the proper orientation of standard PET. A proper orientation means that the area stretch ratio which corresponds to the ratio of a given (marked) area on the stretched bottle (called: bubble) surface to the corresponding area on the surface of the unstretched parison should be about 12.5. In the field of bottle making this area stretch ratio is called 'natural stretch ratio' (NSR).

The NSR can be determined in a free-blowing experiment. Free-blowing of thermoplastics, in particular PET and PET copolymers, is a well known technique used to obtain empirical data on the stretching behavior of a particular resin formulation. The method of free blowing PET parisons is described in "Blow Molding Handbook", edited by Donald V. Rosato, Dominick V. Rosato, Munich 1989. The term "free-blowing" means that a parison is blow-molded without using a mold. Free-blowing a bottle from a parison involves heating the parison to a temperature above its glass transition temperature and then expanding the parison outside of a mold so that it is free to expand without restriction until the onset of strain hardening. Strain hardening can be detected in a stress-strain curve as an upswing in stress following the flow plateau. To a large extent the strain hardening is associated with molecular ordering processes in the resin. Parameters, which exhibit a strong influence on the onset of strain hardening, are molecular weight, the rate of deformation, temperature of the parison and the amount of modifier. If the blow pressure and heating of the parison is properly set for a given parison, it will continue to expand until all of the PET is oriented to the point that stretching will stop at about the natural stretch ratio, or slightly beyond. The outer marked area of the bubble can be converted to a stretch ratio by dividing this marked area by the corresponding outer marked area of the parison.

During injection molding some reduction of the intrinsic viscosity (IV) occurs, and as a consequence the determined NSR is higher, compared to the NSR with no IV reduction. For better comparison of resin properties, the NSR can be calculated for each resin composition. This avoids the influence of process conditions of injection molding on the determined NSR value.

The disadvantage of using known commercial PET in a parison design with a thick sidewall is that a long cooling time is required during injection molding in order to avoid crystallization. A further reduction in size of the parison is limited by the sidewall thickness. If the sidewall thickness is too large, crystallization cannot be prevented during cooling after injection molding.

Thus, in order to avoiding crystallization during injection molding and to improve the strain hardening of known commercial PET, one skilled in the art would probably either add a modifier to the PET or - if already present - try to adjust the amounts of such modifiers. However, common modifiers such as isophthalic acid (IPA), cyclohexanedimethanol (CHDM) or diethylene glycol (DEG) tend to shift the onset of strain hardening to higher stretch values which corresponds to an increase in the NSR, which is disadvantageous. The only commonly known way to reduce the NSR is by way of increasing the molecular weight (i.e. the intrinsic viscosity [IV]) of the PET. Yet, the molecular weight cannot be increased to an extent that would offset the negative influence of the modifier and at the same time decrease the NSR to a sufficiently low value.

A further problem associated with common commercial bottle resins is the high DEG content. The high DEG level in common commercial PET helps to prevent crystallization; on the other hand, the high DEG level makes it impossible to manufacture economically small size polyester bottles for various reasons.

Yet another problem in the manufacture of PET bottles is the crystallization rate of the resin. If the crystallization rate is too high, the process window becomes too narrow. An economic manufacture of small bottles requires, that the crystallization rate is slow. However, some known common commercial polyesters have too high crystallization rates.

Thus, there is still a need for an improved PET resin that is specifically adapted for making containers, and in particular bottles.

**Prior Art**

Some modified polyester compositions are known.

US-A-4,499,262 describes a process for the preparation of sulfo-modified polyesters. However, this document does not disclose how to reduce DEG formation during the preparation of the polyester. Quite contrary US-A-4,499,262 teaches DEG as an optional glycol component of the polyester. The NSR of this polyester is too high.

US-A-4,579,936 discloses an ethylene terephthalate copolymer with an alicyclic sulfonate as co-monomer. It mentions that aromatic sulfo-monomers yield in high diethylene glycol content and that such DEG formation can only be controlled by the addition of sodium acetate. According to US-A-4,579,936 the use of alicyclic sulfonate monomers do not yield in as high a DEG formation as with aromatic sulfo-monomers. US-A-4,579,936 does not mention the addition of $Na_2HPO_4$ during polymer production. Moreover, the NSR of the polyester of Example 4 of US-A-4,579,936 was determined to be about 12, which is too high to solve the problem upon which the present invention is based.

JP 06-099475 discloses a sulfo-modified polyester for use in direct blow molding for bottles and containers. Tetramethylammonium hydroxide (TMAH) is disclosed as an additive. Yet, DEG formation during the polyester manufacture is still too high. JP 06-099475 does not mention the addition of $Na_2HPO_4$ during polymer production.

US-A-5,399,595 disclose a sulfo-modified polyester with a high melt viscosity, high melt strength and a high NSR, and which can be foamed with a wide range of foaming agents. The content of DEG in the polyester is not disclosed. US-A-5,399,595 does not mention the addition of $Na_2HPO_4$ during polymer production.

EP-A-0 909 774 discloses the use of phosphates like $Na_2HPO_4$ for further increase in reactivity. The increase in reactivity is disclosed for the preparation of polybutylene terephthalate and a catalyst composition based on Ti and/or Zr and a lanthanide series element or hafnium. There is no disclosure that the polyester may contain any sulfo-monomers nor of the DEG content of the polymers nor is there a disclosure how to reduce the amount of DEG formed during manufacture.

US-A-4,002,667 disclose a process for the manufacture of bis-(2-hydroxyethyl)-terephthalate by reacting dimethyl terephthalate and ethylene glycol with a basic catalyst, e.g. dialkali hydrogen phosphate. The use of a basic catalyst improves the yield of bis-(2-hydroxyethyl)-terephthalate with minimal oligomer formation. There is no disclosure that the polyester may contain any sulfo-monomers nor of the DEG content of the polymers nor is there a disclosure how to reduce the amount of DEG formed during manufacture.

US-A-5,608,032 discloses a catalyst composition for the polycondensation of terephthalic acid with ethylene glycol with antimony, a second metal salt catalyst and an alkali metal phosphate as co-catalyst. The catalyst composition increases the reaction rate and reduces the degree of yellowness of the polyethylene terephthalate. There is no disclosure that the polyester may contain any sulfo-monomers nor of the DEG content of the polymers nor is there a disclosure how to reduce the amount of DEG formed during manufacture.

Japanese patent application JP 59-093723 discloses a method for the production of polyester, wherein at least two compounds are added to the second stage of the polycondensation. The two added compounds are characterized in that an aqueous solution of these compounds forms a pH buffer at 18°C. There is no disclosure of the DEG content of the polymers nor is there a disclosure how to reduce the amount of DEG formed during manufacture. Quite contrary JP 59-093723 teaches DEG as an optional glycol component of the polyester. Example 1 of JP 59-093723 was reproduced with and without sodium dimethyl-5-sulfonatoisophthalate and with and without $Na_2HPO_4$. At best the NSR reached 10.9, which is still unsatisfactory.

Thus, there is still a need for improvement both in the production of beverage bottles as well as in the properties of such bottles. It is, therefore, an object of the invention to provide a polyester composition that allows for economic manufacture polyester container, in particular containers having a low planar stretch ratio, and more particularly small size containers. It is an object of the invention to provide a polyester, which at the same time satisfies the following characteristics:

- low DEG content, i.e. < 5 wt.-%, preferably < 3 wt.-%, especially preferred < 2.5 wt.-% (based on the weight of the polyester)
- natural stretch ratio (NSR) <10, preferably < 9.6, especially preferred < 9.3
- reduced thermal crystallization (the half time of crystallization at 200°C is > 150 sec, preferably > 250 sec, especially preferred > 300 sec).

It is a further object of the invention to provide for thinner walled parisons for making containers, especially bottles.

## Brief Description of the Invention

This object is achieved by a polyester comprising at least 85 Mol.-% of polyethylene terephthalate and at least 0.01 Mol.-% but not more than 5.00 Mol.-% of units of the formula (I)

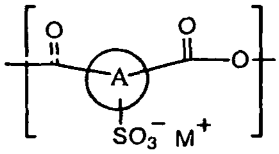

(I)

wherein

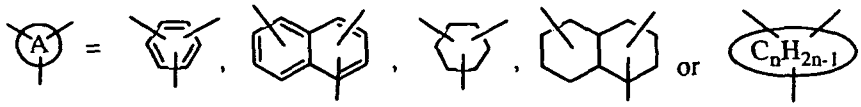

wherein n is an integer from 3 to 10 and wherein
$M^+$ is an alkali metal ion, earth alkali metal ion, phsphonium ion or ammonium ion and
wherein the polyester contains < 5.0 wt.-%, preferably < 3.0 wt.-% and especially preferred < 2.5 wt.-% of diethylene glycol and
wherein the polyester contains $Na_2HPO_4$ in an amount such that the phosphor content is 10 to 200 ppm, preferably 10 to 150 ppm, especially preferred 10 to 100 ppm (based on the weight of the polyester) and wherein the polyester is either free of or does not contain more than 9 ppm preferably 5 ppm and especially preferred 3 ppm of $NaH_2PO_4$, and wherein the intrinsic viscosity is 0.6 to 1.0, preferably 0.7 to 0.9 and especially preferred 0.75 to 0.89.

Further objects of the invention are a parison and a rigid container "made from at least" such a polyester composition. The words "made from at least" used therein have to be interpreted with their broadest meaning. Within the scope of the invention, the parison or container can be constituted of such a resin composition or more broadly the parison or container may only comprise such a resin composition. In particular, the parison or container of the invention can be made from a blend of said polyester composition with at least one other resin composition; the parison or container of the invention can be of the monolayer type or of the multilayer type. In case of multilayered parison or container, only part of the layers (at least one layer) can be "made from" the polyester resin of the invention.

Preferably a container of the invention has a longitudinal stretch ratio ($SR_L$) less than 4, and/or a hoop stretch ratio ($SR_H$) less than 3, and/or a planar stretch ratio (SR) less than 12, and preferably less than 10.

The containers of the invention are preferably (but not only) small volume containers, i.e. having a fill volume less or equal to 1 l, especially less or equal to 0.6 l, and more especially less or equal to 0.5 l.

A further object of the invention is a process of making a hollow plastic container by biaxially stretching in a mold (in particular by stretch blow molding) a parison of the invention.

Preferably the parison is biaxially stretched with a longitudinal stretch ratio ($SR_L$) less than 4, and/or with a hoop stretch ratio ($SR_H$) less than 3, and/or with a planar stretch ratio (SR) less than 12, and preferably less than 10.

## Short Description of the Drawings

- Figure 1 shows an example of a thin and long parison of the invention;
- Figure 2 is a view in longitudinal cross-section of the parison of Figure 1 (plane II-II),
- Figure 3 is a first example (A) of a 330 ml bottle obtained by stretch-blow molding the parison of Figures 1 and 2, and
- Figure 4 is a second example (B) of a 330 ml bottle obtained by stretch-blow molding the parison of Figures 1 and 2.

## Detailed Description of the Invention

Preferably

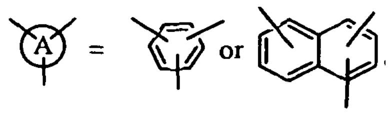

and especially preferred

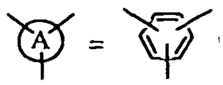

with the attachments preferably in the 1-, 3- and 5-position (for the phenyl ring) and in 2-,4- and 6-position (for the naphthyl ring).

Preferably $M^+$ is an alkali metal ion, especially preferred $Li^+$, $Na^+$ or $K^+$.

It was surprisingly found that $Na_2HPO_4$ in the above mentioned polyester leads to a significant reduction in the DEG content in the polymer compared to a mixture of $NaH_2PO_4$ and $Na_2HPO_4$ or to $NaH_2PO_4$ alone. It was also surprisingly found that $Na_2HPO_4$ leads also to a significant DEG reduction compared to the use of polyphosphoric acid. If the phosphor content in the polyester comprises more than 200 ppm, than the clarity of the polyester is not good. If the phosphor content in the polyester is less than 10 ppm, than the effect on the reduction of the DEG content is negligible.

Preferably the $Na_2HPO_4$ (disodium monohydrogenphosphate) is employed in the form of the hepta-hydrate (•7 $H_2O$), especially preferred as dodeca-hydrate (•12 $H_2O$). If it is employed e.g. in dehydrated form the $Na_2HPO_4$ is not soluble in glycol and therefore it is difficult to add to the reactor.

The polyester according the invention preferably also comprises organic acid salts containing an alkali metal cation and an anion derived from lower-aliphatic carboxylic acids. Examples of suitable salts include the lithium, sodium and potassium salts of acetic acid. Preferred salts are sodium acetate and lithium acetate. The amount of organic salts in the polyester is greater than 10 ppm.

Preferably the polyester comprises at least 0.01 Mol-%, but not more than 3.00 Mol-%, and especially preferred at least 0.01 Mol-%, but not more than 1.50 Mol-% of units of the formula (I). If the polyester comprises less than 0.01 Mol-% of units of the formula (I) the targeted NSR is difficult to achieve, if it comprises more than 5.0 Mol-% the melt viscosity of the polymer is too high for economically injection molding.

The intrinsic viscosity ([IV]) is calculated from the specific viscosity according to the formula [IV] = 0.0006907 x {specific viscosity x 1000} + 0.063096. The specific viscosity is measured in dichloroacetic acid in 0.01 g/ml solution, at 25°C.

If the intrinsic viscosity is below 0.6 the targeted NSR is difficult to achieve, if it is above 1.0 the melt viscosity is too high for injection molding.

The IV given above is the IV of the resin. It should however be noted that the measured IV of a preform or containers and in particular bottles is usually below the IV of the polyester resin because IV degradation occurs during injection molding process. The IV of the resin can however be recalculated from the IV of the preform or bottle by simply taking into account the IV degradation that occurred during bottle manufacture.

If the DEG content is above 5.0 wt-% the target NSR is difficult to achieve.

It is preferred that the half time of crystallization at 200°C of the polyester according to the present invention is > 150 sec, more preferably > 250 sec, especially preferred > 300 sec. If the crystallization rate is below 150 sec at 200°C the process window will become very narrow such that the stretched bottles become hazy.

It should however be noted that the measured half time of crystallization of a preform or containers and in particular bottles is usually below the half time of crystallization of the polyester resin because IV degradation occurs during injection molding process. The lower the IV the shorter the half time of crystallization. The half time of crystallization of the resin can however be recalculated from the half time of crystallization of the preform or bottle by simply taking into account the IV degradation that occurred during bottle manufacture.

The polyester according to the invention comprises at least 85 Mol.-% of polyethylene terephthalate and at least 0.01 Mol.-% but not more than 5.00 Mol.-% of units of the formula (I). The remaining molar amount of 0.0 Mol.-% to not more than 10 Mol.-% are modifying agents which have no negative influence on the DEG content and/or NSR

and/or crystallization rate. Useful modifying agents are reheat agents like carbon black, graphite, or dark pigments; fillers; chain branching agents; antibloc agents; crystallization retarding agents; barrier improving agents; colorants, all of which are known to those skilled in the art. Preferred crystallization retarding agents are isophthalic acid, 1,4-cyclohexanedimethanol; the cyclo-aliphatic diol can be employed in the cis or trans configuration or as mixtures of both forms. Preferred colorants are Polysynthren® Blau RLS und RBL (Clariant, Pigments & Additives Division, Sulzbach am Taunus, Germany), Makrolex® Rot 5B (Bayer Chemicals AG, Leverkusen, Germany) and the like. Preferred barrier improving agents are 2,6-naphthalenedicaboxylic acid; isophthalic acid, 4,4'-bibenzoic acid; 3,4'-bibenzoic acid or their halide or anhydride equivalent or the corresponding ester, and the like; and polyamides like MXD6® (Mitsubishi Gas Chemical Europe, Düsseldorf, Germany) or oxygen scavengers like Amosorb® (BP, Sunbury on Thames, United Kingdom).

The new sulfo-modified resin allows the design of longer and thinner parisons than those known in the art. The onset of strain hardening in the new resin is earlier and smaller bottles can be formed (compared to a standard resin) in the free-blowing experiment, based on the same parison design. Thus, lower natural stretch ratios (below 12.5, preferably of 10 or lower) are achieved yielding in excellent bottle properties like creep behaviour, topload, burst pressure and barrier performance.

The polyester according to the present invention is made by reacting

- a diacid or diester component comprising at least 85 mole percent terephthalic acid (TA) or $C_1$-$C_4$ dialkyl terephthalate with
- a diol component comprising at least 85 mole percent ethylene glycol (EG) and with
- at least 0.01 but not more than 5.00 Mol.-% of a compound according to formula (II):

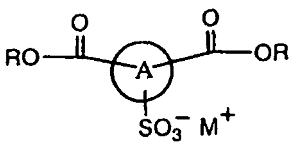

(II)

wherein R is hydrogen, a $C_1$-$C_4$-alkyl or a $C_1$-$C_4$-hydroxyalkyl and $M^+$ and

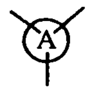

have the meaning given above in formula (I). It is preferred that the diacid component be TA (in this case the process is called PTA process or PTA route), or the dialkyl terephthalate component be dimethyl terephthalate (DMT) (in this case the process is called DMT process or DMT route), and R in the compound according to formula (II) is hydrogen, methyl or hydroxyethylene. The mole percentage for all the diacids/dialkyl acid components total 100 mole percent, and the mole percentage for all the diol components total 100 mole percent.

Preferred production of the polyethylene terephthalate (PET) according to the invention comprises reacting terephthalic acid (TA) (or dimethyl terephthalate - DMT) and a compound according to formula (II) with ethylene glycol (EG) at a temperature of approximately 200 to 290°C forming monomer and water (100 to 230°C forming monomer and methanol, when using DMT). Because the reaction is reversible, the water (or methanol) is continuously removed, thereby driving the reaction to the production of monomer. The monomer comprises primarily the bishydroxyethyl ester of the employed acids/methyl esters, some monohydroxyethyl ester, and other oligomeric products and perhaps small amounts of unreacted raw materials. During the reaction of TA, formula-(II)-compound and EG it is not necessary to have a catalyst present. During the reaction of DMT, formula-(II)-compound and EG it is recommended to use an ester interchange catalyst. Suitable ester interchange catalysts are compounds of Groups Ia (e.g. Li, Na, K), IIa (e.g. Mg, Ca), IIb (e.g. Zn), IVb (e.g. Ge), VIIa (e.g. Mn) and VIII (e.g. Co) of the Periodic Table, e.g. the salts of these with organic acids. Preference is given to those ester interchange catalysts which exhibit some solubility in the reaction mixture. Preferred are salts of: Mn, Zn, Ca, or Mg, in particular manganese, with lower-aliphatic carboxylic acids, in particular with acetic acid.

The amount of Mn, Zn, Mg or other transesterification catalysts employed in the present invention is preferably from about 15 to about 150 ppm metal based on the PET polymer. Suitable cobalt compounds for use with the present invention include cobalt acetate, cobalt carbonate, cobalt octoate and cobalt stearate. The amount of Co employed in the present invention is from about 10 to about 120 ppm Co based on the PET polymer. This amount is sufficient to

balance any yellowness that may be present in the PET based polymer.

Subsequently, the bishydroxyethyl ester and monohydroxyethyl ester undergo a polycondensation reaction to form the polymer. Suitable catalysts for the polycondensation are compounds of antimony (e.g. $Sb(ac)_3$, $Sb_2O_3$), germanium (e.g. $GeO_2$) and Ti (e.g. $Ti(OR)_4$, $TiO_2/SiO_2$, sodium titanate). Preferred polycondensation catalysts are the antimony compounds.

The above catalysts may be added at any time during the polymerisation. Polymerization and polymerizing, with respect to the present invention, shall mean the steps of forming the monomer and the subsequent polycondensation.

An essential aspect of the invention is the presence of $Na_2HPO_4$ in the polymer. While $Na_2HPO_4$ may be added at any time during polymerisation, it is preferably added after the end of the transesterification reaction (in case of the DMT route).

Other additives such as the modifying agents mentioned above may optionally be incorporated into the molten polymer, or can be incorporated with the raw materials, or at any time during polymerisation as is known to those skilled in the art.

The process for the manufacture of the polymer according to the invention may be performed either batch-wise or continuously.

The intrinsic viscosity at the end of polymerisation is generally between 0.48 and 0.65 dl/g. It can be increased to values greater than 0.6 dl/g by means of solid state polycondensation (SSP) of the resin at temperatures generally between 180°C and 240°C.

The invention will now be illustrated by the following non-limiting examples.

## Measurement Methods

### Half time of crystallization

The half-time of crystallization is determined with a differential scanning calorimeter apparatus, DSC (TA Instruments DSC 2910; with cooling unit (nitrogen flow 6 to 8 l/hour); nitrogen flow of 40 to 50 ml/min for the measuring cell; software: TA Instruments "Advantage" Vers. 2.0).

The base line of the DSC instrument was calibrated by running at a heating rate of 10°C/minute, without any samples (even no reference sample) in the DSC, from 0°C to 350°C. The cell constant of the DSC instrument was calibrated with high-purity indium. A mass of about 10 mg was used for each indium sample and the heating rate was 10°C/minute. The temperature scale was calibrated with indium, tin, lead and bismuth. A mass of about 10 mg was used for each metal at a heating rate of 10°C/minute. The melting point for each metal was determined by measuring the tangential value of the left side of the melting endotherm peak.

Each solid state polymerized material is dried at 160°C for 24 hrs at a reduced pressure of 1 mbar before measuring the isothermal crystallization. About 5 to 10 mg of the sample is weighed into an aluminum pan and closed. As a reference sample, an empty, closed aluminum pan is used. The isothermal crystallization rate at 200°C is measured by heating each sample from room temperature to 300°C with a heating rate of 50°C/min. At 300°C the sample was held for 5 minutes to ensure complete melting. The DSC was then cooled as fast as possible to 200°C (command: *"jump to 200°C"*) and the crystallization is monitored. After completion of the crystallization the exothermic crystallization peak is integrated. Integration across the exothermic peak was used to construct a plot of relative crystallinity vs. time. The integrated peak area is evaluated with the option "running integral" and on the y-axis the "area percent %" is plotted. The time ("half time of crystallization") for the 50% "area percent" value (or 50% of the relative crystallinity) is determined.

### Intrinsic Viscosity

The determination of the intrinsic viscosity was determined on a 0.01 g/ml polymer solution in dichloroacetic acid.

Before dissolution of solid state polymerized material, the chips were pressed in a hydraulic press (pressure: 400 kN at 115°C for about 1 minute; type: PW40® Weber, Remshalden-Grunbach, Germany). 480 to 500 mg polymer, either amorphous chips or pressed chips, were weighed on an analytical balance (Mettler AT 400®) and dichloroacetic acid is added (via Dosimat® 665 or 776 from Metrohm) in such an amount, that a final polymer concentration of 0.0100 g/ml is reached.

The polymer is dissolved under agitation (magnetic stirring bar, thermostat with set point of 65°C; Variomag Thermomodul 40ST®) at 55°C (internal temperature) for 2.0 hrs. After complete dissolution of the polymer, the solution is cooled down in an aluminum block for 10 to 15 minutes to 20°C (thermostat with set point of 15°C; Variomag Thermomodul 40ST®).

The viscosity measurement was performed with the micro Ubbelohde viscometer from Schott (type 53820/II; Ø : 0.70 mm) in the Schott AVS 500® apparatus. The bath temperature is hold at 25.00 $\pm$ 0.05°C (Schott Thermostat CK 101®). First the micro Ubbelohde viscometer is purged 4 times with pure dichloroacetic acid, then the pure dichloroacetic acid is equilibrated for 2 minutes. The flow time of the pure solvent is measured 3 times. The solvent is drawn off and the viscometer is purged with the polymer solution 4 times. Before measurement, the polymer solution is equilibrated for 2 minutes and then the flow time of this solution is measured 3 times.

The specific viscosity is calculated as

$$\eta_{sp} = \left( \frac{average\,flow\,time\,of\,\,polymersolution}{average\,flow\,time\,of\,\,dicloroacaticacid} - 1 \right).$$

The intrinsic viscosity ([IV]) is calculated from the specific viscosity according to the formula [IV] = 0.0006907 x ($\eta_{sp}$ x 1000)+ 0.063096.

Natural Stretch Ratio

**Manufacture of a Parison:**

A parison is made on an Arburg injection-molding machine (Allrounder® 420 C 800-250). The injection-molding machine is equipped with a screw of a diameter of 30 mm and a L/D ratio of 23.3. The Allrounder has 5 heating bands and the feed zone is 465 mm, the compression zone is 155 mm and the metering zone is 155 mm. Water is used as coolant with an inlet temperature < 15°C and an outlet temperature < 20°C.

The description of the parison design follows the description in the "Blow Molding Handbook" (Munich 1989, p 552, Fig. 14.9). The parison weight is 28 g, the wall thickness is 4.0 ± 0.1 mm, the inside diameter is 14.5 ± 0.6 mm, the outside diameter is 22.5 ± 0.5 mm, the overall length is 100.5 mm and the axial length is 79.5 mm.

Before processing the resin is dried in a Piovan® dryer (dew point between - 45°C and - 55°C) at 140°C for 4 to 6 hrs.

The settings of the Arburg injection-molding machine 420 C 800-250 were as follows:

| Variable | typical values |
|---|---|
| heating zone 1 to 5 [°C] | 270 to 290 |
| hot runner temperature [°C] | 275 to 290 |
| nozzle temperature [°C] | 290 to 320 |
| dosing time [sec] | 4 to 5 |
| melt cushion [mm] | 1.5 to 2.8 |
| leftover cooling time [sec] | 5 to 10 |
| back pressure [bar] | 20 to 50 |
| metering stroke [mm] | 30 to 40 |
| metering velocity [mm/sec] | 40 to 50 |
| hydraulic motor [bar] | 60 to 130 |
| injection time [sec] | 1.0 to 1.2 |
| maximum injection pressure [bar] | 600 to 1300 |
| pressure integral [bar*sec] | 300 to 700 |
| hold pressure time [sec] | 8 to 15 |
| change-over point [mm] | 5 to 15 |
| cycle time [sec] | 20 to 25 |
| room temperature [°C] | between 20°C and ≤ 36°C |

Free blow process and NSR determination:

Parisons are marked with a rectangular area (hoop direction [$hoop_{parison}$] = 1.35 cm, axial direction [$axial_{parison}$] = 2.00 cm) on the outer surface. Before free blowing, the parisons are stored for 24 hrs at 20°C.

Parison reheating was performed on a Krupp-Corpoplast stretch blow-molding machine (LB 01®) with quartz near infrared heating elements. The overall heating capacity was set to 69%. The LB 01® has 6 heating zones and the following settings for each heating zone was used:

heating zone 1: 70
heating zone 2: 30
heating zone 3: 50
heating zone 4: 50
heating zone 5: 50
heating zone 6: 50

In order to obtain equilibrium in the infrared radiation, the lamps are heated for at least 6 hr prior to the first free blowing test. The distance of the quartz heating elements to each other is < 25 mm and the distance of the quartz heating elements to the parison axis is < 55 mm.

The parisons at 20°C were heated with the infrared radiation typically for 12 to 18 seconds. After a traverse motion of the radiant heater and after a holding time of 15 seconds, the temperature of the parison is measured with a KT14P® sensor (Heimann GmbH, Germany). The distance of the sensor to the parison surface is between 14 to 15 cm and the temperature measurement was performed on the upper part of the parison (end cap is top). All free-blowing trials are performed with parisons with an apparent temperature between 84.5°C and 85.0°C measured with the KT14P® sensor. According to the indication translation table KT14P® from Krupp-Corpoplast (April 24th 1987), the apparent temperature of 85.0°C corresponds to actual 112.5°C.

Within 25 seconds, the heated parison (cooled at the parison end cap) is screwed onto a blowing apparatus. After 25 seconds the equilibrated parison is pressurized with 5 bar air. After 5 seconds, the valve to the pressure line is closed and the free blown bottle is cooled down on the outside with a wet woven fabric. In order to freeze the bubble size after blowing, the blow pressure is maintained until the pressure inside the bubble reaches 4 bar, then the pressure is released from the bubble.

The marked rectangular area on the surface of the bubble, which is now stretched, is measured to obtain the $hoop_{bottle}$ and the $axial_{bottle}$ lengths. The NSR is calculated according the following equation:

$$NSR = (hoop_{bottle} / hoop_{parison}) * (axial_{bottle} / axial_{parison}).$$

## Manufacture of PET

<u>Batch Process</u>

The details of the batchwise preparation of polyethylene terephthalate copolymer comprise two substeps:

a) transesterification of dimethyl terephthalate and sodium dimethyl-5-sulfonatoisophthalate, using monoethylene glycol and
b) polycondensation.

In each case the transesterification and the polycondensation is performed with approximately the same time parameters. Once the polycondensation was completed, the autoclave was cleaned using monoethylene glycol. The transesterification product is polycondensed in an autoclave. The amounts used, the method, and the other conditions are described below and summarized in Table 2.

The transesterification consists of the reaction of dimethyl terephthalate (DMT) and sodium dimethyl-5-sulfonatoisophthalate with monoethylene glycol (MEG) in the melt, using manganese-(II)-acetate tetrahydrate as a transesterification catalyst. The transesterification reaction is initiated at a temperature of 150°C and is completed at 220°C (product temperature).

Additive 2 (see Table 2) is dissolved in 290 ml monoethylene glycol, then 40 g sodium dimethyl-5-sulfonatoisophthalate (5-SIM) is added and the glycol is heated to 90°C in order to obtain a clear solution.

2000 g dimethyl terephthalate (DMT), 910 ml Monoethylene glycol, the glycol solution of 5-SIM and 642 mg using manganese-(II)-acetate tetrahydrate are added. The composition is kept under nitrogen. Once the DMT has melted and the reaction has started, methanol is formed.

The transesterification product obtained is then stabilized by addition of a phosphorous compound (additive 1; see Table 2) and than polycondensed in an autoclave after addition of the polycondensation catalyst. The preferred stabilizer is disodium monohydrogenphosphate. The polycondensation catalyst is either $Sb_2O_3$ or a titanium containing catalyst like C94® or Hombifast PC®. The pressure is reduced to 0.3 mbar, and the temperature of the interior space is increased from 180° to 280°C. The reaction is continued with separation of monoethylene glycol (MEG) until the desired melt viscosity is achieved. The polymer is then pelletized.

Continuous Process

The continuous preparation of polyethylene terephthalate copolymer was performed in four sequentially connected vessels for transesterification and polycondensation. The amounts used, the method, and the other conditions are described below.

The transesterification consists of the reaction of dimethyl terephthalate (DMT) and sodium dimethyl-5-sulfonatoisophthalate with monoethylene glycol MEG in the melt, using manganese-(II)-acetate tetrahydrate as a transesterification catalyst. The transesterification reaction is initiated at a temperature of 180°C and is completed at 240°C (product temperature).

The DMT is added in liquid form. Additive 2 (see Table 3) is dissolved in monoethylene glycol then sodium dimethyl-5-sulfonatoisophthalate (5-SIM) is added and the glycol is heated to 90°C in order to obtain a clear solution. As preferred additive 2, sodium acetate trihydrate is used. Monoethylene glycol, the glycol solution of 5-SIM and the transesterification catalyst are then added continuously. The transesterification composition is kept under nitrogen. The methanol and eventually the water formed during transesterification is distilled off.

The transesterification or esterification product obtained is then transferred to the second vessel, where a phosphorous compound as stabilizer and a polycondensation catalyst are added. Disodium monohydrogenphosphate is preferred as stabilizer. The pressure is reduced to 300 mbar in the second vessel and to 20 mbar and than 1 mbar in the following vessels. At the same time the temperature is increased from 240° to 285°C. The polymer obtained is then pelletized.

Table 1 shows the reproduction of example 1 of JP 59-093723 which does not contain any sodium dimethyl-5-sulfonatoisophthalate (Comparative Example 1) and with sodium dimethyl-5-sulfonatoisophthalate (Ex. 3) and example 1 of JP 59-093723 without $Na_2HPO_4$ (Ex. 2).

For better comparison, the NSR was not determined but calculated according the following formula: $NSR = 18.91 + 1.74 * DEG - 1.37 * SIM - 13.43 * IV$.

DEG: diethylene glycol in wt-%; SIM: sodium dimethyl-5-sulfonatoisophthalate in wt-% (wt-% is based on the weight of the polyester). At best the NSR reached 10.9, which is still unsatisfactory.

Table 2 shows a comparative example "Batch 1" which represents a polyester with 1.3 mol-% of sodium dimethyl-5-sulfonatoisophthalate (5-SIM), with standard phosphor stabilizer. At best the NSR reached 10.1, which is still unsatisfactory.

Examples "Batch 2" to "Batch 5", which are examples according to the invention, are batch process examples using $Na_2HPO_4$ as stablizier and antimony trioxide as polycondensation catalyst. Examples Batch 6 and Batch 7 were carried out using a titanium compound. Table 2 shows the composition of each sample, the DEG value, the IV, the NSR value and the half time of crystallization.

Table 3 shows examples "CP1" to "CP3" which are examples according to the invention. They were carried out on continuous line using $Na_2HPO_4$ x $12H_2O$ as stabilizer and antimony trioxide as poly-condensation catalyst. Table 3 shows the composition of each sample, the DEG value, the IV, the obtained NSR value and the half time of crystallization.

Table 1: Comparison with JP 59-093723

| | Comp. Ex. 1 | Ex. 2 | Ex. 3 |
|---|---|---|---|
| | "Example 1" of JP 59-093723 | | |
| DMT | 2000 g | 2000 g | 2000 g |
| monoethylene glycol (MEG) | 1077 ml | 1077 ml | 787 ml |
| 5-SIM | 0 | 0 | 40 g |
| Na(ac) x $3H_2O$ | 0 | 0 | 1048 mg |
| Monoethylene glycol | 0 | 0 | 290 ml |
| $Mn(ac)_2$ x $4H_2O$ | 907 mg | 907 mg | 907 mg |
| Trimethyl phosphate | 1.08 g | 1.08 g | 1.08 g |
| $NaH_2PO_4$ x $H_2O$ | 14 mg | 216 mg | 14 mg |
| $NaH_2PO_4$ x $7H_2O$ | 196 mg | 0 | 196 mg |
| $TiO_2$ (18 wt% in MEG) | 33,33 g | 33,33 g | 33,33 g |
| $Sb_2O_3$ | 816 mg | 816 mg | 816 mg |

(continued)

| | Comp. Ex. 1 | Ex. 2 | Ex. 3 |
|---|---|---|---|
| | "Example 1" of JP 59-093723 | | |
| DEG [wt-%] | 0.68 | 0.74 | 1.59 |
| IV[dl/g] | 0.687 | 0.607 | 0.547 |
| NSR | 10.9 | 11.9 | 11.6 |
| $t_{0.5}$ [sec] | 66.6 | 75.6 | 285.6 |

Table 2: Batch Trials

| | **Batch 1** comparative | **Batch 2** | **Batch 3** | **Batch 4** | **Batch 5** | **Batch 6** | **Batch 7** |
|---|---|---|---|---|---|---|---|
| DMT | 2000 g | 2000 g | 2000 g | 2000 g | 2000 g | 2000 g | 2000 g |
| Monoethylene glycol | 910 ml | 910 ml | 910 ml | 910 ml | 910 ml | 910 ml | 910 ml |
| 5-SIM | 40g | 40g | 40g | 40g | 40g | 40g | 40g |
| Additive 2 | 864 mg Na(ac) $3H_2O$ | 978 mg Li(ac) $2H_2O$ | 864 mg Na(ac) $3H_2O$ | 864 mg Na(ac) $3H_2O$ | 864 mg Na(ac) $3H_2O$ | 864 mg Na(ac) $3H_2O$ | 864 mg Na(ac) $3H_2O$ |
| Monoethylene glycol | 290 ml | 290 ml | 290 ml | 290 ml | 290 ml | 290 ml | 290 ml |
| $Mn(ac)_2$ $x4H_2O$ | 642 mg | 642 mg | 642 mg | 642 mg | 642 mg | 642 mg | 642 mg |
| Additive 1 | 3.8 g Polyphosphoric acid in MEG (5%) | 604 mg $Na_2HPO_4x7H_2O$ | 604 mg $Na_2HPO_4x7H_2O$ | 1730 mg $Na_2HPO_4x7H_2O$ | 736 mg $K_2HPO_4x7H_2O$ | 467 mg $Na_2HPO_4x7H_2O$ | 467 mg $Na_2HPO_4x7H_2O$ |
| PC-Catalyst | 831 mg $Sb_2O_3$ | 831 mg $Sb_2O_3$ | 831 mg $Sb_2O_3$ | 831 mg $Sb_2O_3$ | 831 mg $Sb_2O_3$ | 37 mg (10 ppm Ti) C94® | 126.6 mg (10 ppm Ti) Hombifast PC® |
| DEG[wt-%] | 1.28 | 0.70 | 0.80 | 0.84 | 0.86 | 0.82 | 0.75 |
| IV [dl/g] | 0.619 | 0.595 | 0.636 | 0.629 | 0.639 | 0.623 | 0.615 |
| NSR | 10.1 | 9.5 | 9.2 | 9.3 | 9.2 | 9.4 | 9.4 |
| $t_{0.5}$ [sec] | 443.4 | 343.2 | 450.6 | 491.4 | 366.0 | 276.0 | 243.0 |

Table 3: Continuous Polymerization Trials:

| | CP 1 | CP 2 | CP 3 |
|---|---|---|---|
| PET[kg/h] | 44 | 44 | 44 |
| 5-SIM [wt-%] | 2.0 | 2.0 | 1.0 |
| Na(ac) x $3H_2O$ [ppm] | 524 | 524 | 524 |
| $Mn(ac)_2x4H_2O$ [ppm] | 321 | 321 | 321 |
| $Na_2HPO_4$ x $12H_2O$ [ppm] | 405 | 405 | 405 |
| $Sb_2O_3$ [ppm] | 429 | 429 | 429 |
| DEG[wt-%] | 1.53 | 1.75 | 1.45 |
| IV[dl/g] | 0.804 | 0.799 | 0.848 |
| NSR | 8.2 | 8.6 | 8.8 |
| $t_{05}$ [sec] | 510 | 588 | 558 |

## PROCESS FOR MAKING BOTTLES

The resin composition of the invention is advantageously used for making rigid hollow containers and more particularly small volume containers (bottles or the like having a fill volume typically less than 1 l, and more especially 0.6 l or less).

The containers of the invention are obtained in a usual way by making a parison (injection molding) and then by stretch-blow molding the said parison in a mold. The injection molding step and the stretch-blow molding step can be performed in two separate stages with a reheating of the parison, or can be performed in line as a one stage process.

Example of Parison Design (Figures 1 and 2)

Figure 1 and Figure 2 show a non-limiting example of a parison which is made from a resin composition of the invention. On Figure 2, the parison wall thickness is referred (WT), inside diameter is referred (ID), outside diameter is referred (OD), overall length is referred (OL), and the axial length is referred (AL).

Referring to Figures 1 and 2, dimension d is the mean diameter of the parison. d is determined by point Pc, which is the middle point of the line Lc between point Pa and point Pb. Point Pa is the middle point of the line La (corresponding to the internal surface of the parison in the linear wall portion of the parison) and point Pb is the middle point of the line Lb (corresponding to the external surface of the parison in the linear wall portion of the parison).

Referring to Figures 1 and 2, dimension l is the developed length of the parison, and is determined by formula :

$$l = \frac{Di + Do}{2}$$

Wherein Di is the length of internal line (bold outlined on Figure 2), and Do is the length of external line (bold outlined on Figure 2).

The parison can be obtained by any standard injection process.

By way of a non-limiting example, optimized dimensions and weight for a parison, which has been more especially designed in order to make a 330ml bottle, are summarized in Table 4.

Table 4 : Example of Weight and Dimensions:

| | |
|---|---|
| Weight (g) | 19.953 g (+/- 0.5 g) |
| WT(mm) | 2.3 (+/-5 %) |
| ID (mm) | 19.22 |
| OD (mm) | 23.82 |

(continued)

| | |
|---|---|
| OL(mm) | 94 |
| AL (mm) | 73 |
| d (mm) | 21.3 |
| 1 (mm) | 78.33 |

By way of comparison, a typical PET parison (weight around 20 g) designed by one skilled in the art for making a 330 ml stretch-blow molded bottle would usually have a width (WT) of 4.2 mm (+/-5%) and an axial length (AL) of 56-57 mm. The parison of the invention is thus thinner and longer.

The smaller wall thickness of the parison of the invention advantageously reduces the injection cycle time (ICT) of the said parison (i.e. total cycle time for making the parison by injection, including the cooling time).

Furthermore, because the parison of the invention is thinner and longer than the said standard PET parison, it is easier to (re)heat during the stretch-blow molding step. The heating energy (or heating temperature) required during the stretch-blow molding step is lower and can be distributed more uniformly. The resin distribution in the wall is more uniform.

Example of Injection - Molding Step

A particular and non-limiting example of an injection process that was used for making a parison having the weight and dimensions of Table 4 is now going to be briefly described.

A parison is made on an Husky injection-molding machine (XL160 PT). The injection-molding machine is equipped with a screw of a diameter of 42 mm and a UD ratio of 25/1. The Husky machine has 6 heating bands that form three heating zones. Water is used as coolant with an inlet temperature < 10°C and an outlet temperature < 15°C.

Before processing, the resin (in the form of pellets) is dried in a MOTAN® dryer (dew point around -30°C) at 160°C for 4 hrs.

The settings of the Husky injection-molding machine (XL160 PT) were as follows:

| Variable | Typical Values |
|---|---|
| heating zone 1 to 3 [°C] | 285 to 295 |
| hot runner temperature [°C] | 285 to 295 |
| nozzle temperature [°C] | 285 to 290 |
| dosing time [sec] | 5.8 to 6.1 |
| melt cushion [mm] | 3.9 to 5.2 |
| cooling time [sec] | 2.5 |
| back hydraulic pressure [bar] | 19 to 19.5 |
| metering stroke [mm] | 23 |
| metering fill speed [g/sec] | 10 |
| hydraulic motor [bar] | 200 |
| injection time [sec] | 1.87 to 1.96 |
| maximum hydraulic injection pressure [bar] | 26 to 55 |
| hold hydraulic pressure time [sec] | 4.5 |
| change-over point [mm] | 6.9 |
| cycle time [sec] | 12.3-15 |
| room temperature [°C] | between 20°C and ≤ 36°C |

Example of Stretch-Blow Molding Step

Parisons were biaxially stretched and blow-molded on Sidel stretch blow molding machine (SB O/2®), so as to obtain the two types (A and B) of 330 ml (fill volume) bottles shown respectively on Figures 3 and 4. On Figures 3

and 4, the straight line referred "FL" defines the upper limit of the fill volume of the bottle.

As a non-limiting example, the main dimensions of the bottles (A and B) are summarized in Table 5.

Table 5 : Example of Bottle Dimension

| | Bottle A | Bottle B |
|---|---|---|
| D (mm) | 58.5 | 60 |
| L (mm) | 226.79 | 261 |
| $SR_H$ | 2.74 | 2.81 |
| $SR_L$ | 2.89 | 3.33 |
| SR | 7.92 | 9.3 |

In Table 5, and referring also to Figure 3 or 4, dimension (D) is the maximum overall diameter of the bottle ; dimension (L) is the developed length of the bottle surface from the underside of the neck ring and up to the bottle bottom end (bold outlined on Figures 3 and 4).

$SR_H$ is the hoop stretch ratio and is defined by:

$$SR_H = \frac{D}{d}$$

$SR_L$ is the longitudinal stretch ratio and is defined by:

$$SR_L = \frac{L}{l}$$

SR is the planar stretch ratio and is defined by:

$$SR = SR_L \times SR_H$$

The parison reheating was performed on the Sidel (SB O/2®) with infrared heating elements. The overall heating capacity was set to 73%-88%. The SB O/2® has 10 heating zones, but only 5 heating zones were used, and the following settings for each heating zone were used:

For parisons made from resin CP1:

heating zone 1: 90-95°C
heating zone 2: 70°C
heating zone 3: 40°C
heating zone 4: 30-40°C
heating zone 5: off

For parisons made from standard PET resin 1101 :

heating zone 1: 95°C
heating zone 2: 75°C
heating zone 3: off
heating zone 4: 40°C
heating zone 5: 20-30°C

The distance of the IR heating elements to each other is < 19 mm and the distance of the IR heating elements to the parison axis is < 55 mm.

The conditioned parisons (ambient temperature) were heated with the infrared radiation typically for 12 to 15 seconds. The temperature of the parison is measured just before the blow-molding with a sensor AIS Pyrodig IR 111/S. The distance of the sensor to the parison surface is approximately 50 cm, and the temperature measurement was performed on the middle part of the parison. All free-blowing trials are performed with parisons with an apparent temperature between 77.0°C and 80.0°C.

The heated parison is automatically taken by a gripper and immediately transferred into the blow mold. A preblowing step is performed during approximately 3 seconds, at 10 bars. Then a main blow step is performed during approximately 3 seconds at 40 bars.

## COMPARATIVE BOTTLE TESTING

Previously described resin composition CP1 of the invention was used for manufacturing Bottles A (Figure 3) and B (Figure 4) according to the previously described process. As a comparative example, a standard PET resin (Standard grade PET resin commercialized by company Kosa GmbH under the commercial reference 1101) was also used for manufacturing test bottles hereafter referred as T(A) and (T(B) (with the similar process and in particular with the same parison design than the ones used for bottles A and B). In Table 6 below, T(A) corresponds to a bottle having the geometry of Figure 3 and made from the said standard PET resin ; T(B) corresponds to a bottle having the geometry of Figure 4 and made from the said standard PET resin.

Several tests were performed on the bottles in order to measure the following parameters: mechanical performances (burst pressure, top load), passive gas barrier performances ($O_2$ ingress, $CO_2$ loss), thermal stability.

### Test Methods

#### Burst Pressure Test

The objective of the burst pressure test is to determine the ability of the bottle to withstand a certain internal pressure. It generally consists in measuring the pressure at which the bottle burst.

The test apparatus is a Plastic Pressure Tester AGR/TOPWAVE.

The bottle is filled with water and subsequently pressure is applied on the water. The pressure inside the bottle is increased until the bottle bursts. The pressure at which the bottle bursts is recorded.

#### Top Load Test

The objective of the test is to determine the vertical load that a bottle can withstand before deformation.

The test apparatus is a TOPLOAD tester INSTRON 1011.

The empty bottle under test is centered and positioned upright in the tester.

The load plate is moved downward with a speed of 50 mm/min into contact with the bottle finish and the pressure is progressively increased until the bottle starts to be deformed. At the first deformation of the bottle (= peak 1) the load plate returns to its initial position. The top load value is obtained by reading the load value (kg) on the TOPLOAD tester.

#### $O_2$ Ingress Test

The objective of the test is to determine the $O_2$ gas transmission rate of the bottle, i.e. the quantity of oxygen gas passing through the surface of the package per unit of time.

The testing apparatus is: Calibrated Oxygen Transmission Analysis System MOCON 2/20.

The carrier gas is: mixture of 97.5 % $N_2$ and 2.5 % $H_2$ (minimum of 100 ppm $O_2$)

The test method is derived from ASTM D 3895 (oxygen gas transmission rate through plastic film and sheeting using a coulometric sensor) and ASTM F 1307 (Oxygen transmission rate through dry packages using a coulometric sensor).

The finish of the empty bottle under test is sealed on a metal plate of the testing apparatus by using epoxy glue, and in order to have a leak tight seal between the bottle finish and the plate. (Waiting time in order to let the epoxy glue dry around 2 hours).

First the bottle under test is conditioned to remove all oxygen inside the bottle and to acclimate to the test conditions. This is done by purging the bottle with a stream of the carrier gas (gas flow of 10ml/min) which transports most oxygen out of the bottle through holes in the metal plate. The outside of the bottle is exposed to a known concentration of air (=20.9 % $O_2$) and $O_2$ will migrate through the bottle wall to the inside of the bottle.

After the conditioning period the stream of carrier gas with the migrated oxygen (same flow as conditioning) is transported to a coulometric detector that produces an electric current whose magnitude is proportional to the amount of oxygen flowing into the detector per unit of time (oxygen transmission rate in $cm^3$/bottle/day). The transmission rates are measured for a certain period and the computer will determine when the bottle under test has reached equilibrium by comparing test results on a timed basis. This is called convergence testing and the convergence hours are set at 10. This means that the computer compares the test results of 10 hours before and examines the differences. Equilibrium is reached when the transmission rate varies between individual examinations by less than 1 %.

The oxygen quantity (Z) passing through the wall bottle and measured in ppm of $O_2$/year is obtained by the following conversion formula:

$$Z(\text{ppm of } O_2/\text{year}) = [32*X/22.4*Y]*1000*365,$$

wherein:

X is the oxygen transmission rate in cm3/bottle/day (measured by the MOCON testing apparatus), and
Y is the brimful volume of the tested bottle in ml.

## $CO_2$ Loss Test

The objective of the test is to determine the $CO_2$ loss rate of the bottle and to calculate the bottle shelf life.

The empty bottle is filled with a controlled quantity of dry ice of $CO_2$ in order to obtain the $CO_2$ volume requested in the bottle.

The bottles are filled according to the following procedure: the empty bottle and a cap are weighted on a balance (balance tare step); a piece of dry ice that weights approximately 0.3 g or more than Qg [Qg = 0.0078*brimful volume (ml)] is cut and dropped into the bottle. The cap is put on the bottle and screwed down loosely without completely sealing the bottle. As the dry ice evaporates, the weight of the sample will decrease. Once the balance reading is approximately 0.1 g more than Qg, the cap is quickly screwed in order to fully seal the bottle.

The bottle is then shaken by hand until all the dry ice evaporates inside the bottle and is stored in a temperature controlled chamber at 22°C+/-0.5°C.

The $CO_2$ level inside the bottle is measured by means of an Infra Red (IR) spectrometry (the testing apparatus is: FT-IR Spectrometer PARAGON 1000 PC PERKIN ELMER)

The $CO_2$ level of each bottle is measured according to the following schedule :

| Test Interval | Days after last measurement |
|---|---|
| 0(initial) | interval#0 + 1 day (24 hours) |
| 1 | interval#0 + 10 days +/- 1 day |
| 2 | interval#1 + 4 days +/- 1 day |
| 3 | interval#2 + 7 days +/- 1 day |
| 4 | interval#3 + 7 days +/- 1 day |
| 5 | interval#4 + 7 days +/- 1 day |
| 6 | interval#5 + 7 days +/- 1 day |
| 7(final) | interval#6 + 7 days +/- 1 day |

At each test interval, the $CO_2$ spectrum is collected by scanning with the Paragon 1000 and the peak area between the band: 5050.0 $cm^{-1}$- 4900.0 $cm^{-1}$ is measured. The loss % in peak area of the $CO_2$ content is calculated after each test interval.

After each measurement, the bottle is stored back in the temperature controlled chamber at 22°C+/-0.5°C.

A linear regression is performed on the results in order to obtain the Loss rate %: Loss rate % = $\alpha$ x number of days + $\beta$, wherein $\alpha$ is the slope of the line issued from the linear regression, and $\beta$ is the intercept at zero.

The shelf life is given by the following formula:

$$\text{Shelflife} = \frac{\text{allowable LossRate\%} - \beta}{\alpha}$$

In the results of Table 6 below, the shelf life (in weeks) has been calculated for a $CO_2$ maximum allowable loss rate of 17.5 %.

**<u>Thermal Stability Test for Determination of Creep (%)</u>**

The bottle is filled (up to the brimful limit) with carbonated water containing a certain $CO_2$ concentration (5.4 g $CO_2$/l).

The fill height and the diameter at fill height of the bottle are measured (initially + after 24 h at 22°C and 85 % RH + after 24 h at 38°C and 85 % RH). The volume creep (in %) is calculated.

<u>Table 6 :</u> Experimental Results

| Bottle type | T(A) | A | T(B) | B |
|---|---|---|---|---|
| Burst pressure (bar) | 9.7 +/-0.4 | 12.2 +/-0.4 | 10.0 +/-0.8 | 12.0 +/- 0.6 |
| Top Load (kg) | 19.1 +/-0.5 | 19.4 +/- 1.6 | 16.4 +/- 1.0 | 26.7 +/-2.4 |
| $O_2$ ingress (ppm/year) | 64.1 | 60.6 | 62.3 | 54.3 |
| Shelf life (Weeks) @ $CO_2$ loss 17.5 % | 6.5 +/- 0.1 | 7.0 +/- 0.3 | 6.7 +/- 0.1 1 | 7.4 +/- 0.2 |
| Volume creep (24 H @ 22°C - 85 RH) | / | / | 2.92 $\pm$ 0.17 | 2.46 $\pm$ 0.09 |
| Volume creep (24 H @ 38°C - 85 RH) | / | / | 9.99 $\pm$ 0.44 | 6.49 $\pm$ 0.17 |

The results of Table 6 show that the bottles of the invention (A and B) exhibit improved mechanical performances and improve passive gas barrier performances as compared to standard PET bottle (T(A) and (TB)). The bottles B further exhibit better performance than bottles A, in particular regarding the top load, $O_2$ ingress and volume creep, especially at 38°C ; this can be explained by a better distribution of the material in the wall of the bottle B, as compared to bottle A.

## Claims

1. Parison or rigid container made from at least a polyester resin comprising at least 85 Mol.-% of polyethylene terephthalate and at least 0.01 Mol.-% but not more than 5.00 Mol.-% of units of the formula (I)

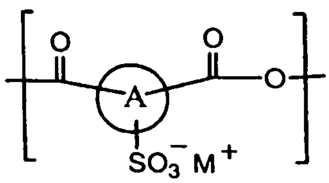

(I)

wherein

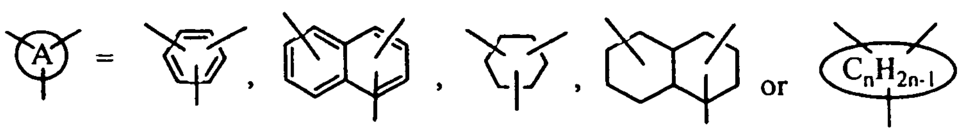

= , , , or

wherein n is an integer from 3 to 10 and wherein

$M^+$ is an alkali metal ion, earth alkali metal ion, phosphonium ion or ammonium ion and wherein the polyester contains < 5.0 wt.-%, of diethylene glycol and wherein the polyester contains $Na_2HPO_4$ in an amount such that the phosphor content is 10 to 200 ppm (based on the weight of the polyester) and wherein the polyester is either free of or does not contain more than 9 ppm of $NaH_2PO_4$, and wherein the intrinsic viscosity is 0.6 to 1.0.

2. Parison or container according to claim 1, wherein

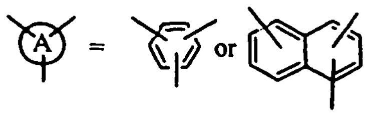

or

3. Parison or container according to claim 1, wherein

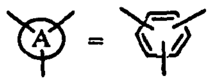

4. Parison or container according to claim 2 or 3, wherein the attachments to the phenyl ring are in 1-, 3- and 5-position and the attachment to the naphthyl ring are in 2-, 4- and 6-position.

5. Parison or container according to one of claims 1 to 4, wherein $M^+$ is $Li^+$, $Na^+$ or $K^+$.

6. Parison or container according to one of claims 1 to 5, wherein the $Na_2HPO_4$ (disodium monohydrogenphosphate) is in the form of the dodeca-hydrate (•12 $H_2O$).

7. Parison or container according to one of claims 1 to 6, wherein the NSR of the polyester resin is <10.

8. Parison or container according to one of claims 1 to 7, wherein the half time of crystallization of the polyester resin is > 150 sec at 200°C.

9. Container according to one of claims 1 to 8, and having a longitudinal stretch ratio ($SR_L$) less than 4, and/or a hoop stretch ratio ($SR_H$) less than 3, and/or a planar stretch ratio (SR) less than 12, and preferably less than 10.

10. Container according to one of claims 1 to 9, and having a fill volume less or equal to 1l, especially less or equal to 0.6l, and more especially less or equal to 0.51.

11. Process of making a container by biaxially stretching in a mold a parison according to one of claims 1 to 8.

12. Process according to claim 11 wherein the parison is being biaxially stretched with a longitudinal stretch ratio ($SR_L$) less than 4, and/or with a hoop stretch ratio ($SR_H$) less than 3, and/or with a planar stretch ratio (SR) less than 12, and preferably less than 10.

13. Process according to claim 11 or 12 wherein the parison is being biaxially stretched so as to form a small volume container having a fill volume less or equal to 1l, especially less or equal to 0.61, and more especially less or equal to 0.51.

**Patentansprüche**

1. Vorformling oder ausgesteifter Container, hergestellt aus zumindest Polyester-Kunststoff (Harz) mit zumindest 85 Mol.-% von Polyehtylen-Therephthalat (PET), und zumindest 0,01 Mol.-%, aber nicht mehr als 5,00 Mol.-% von Einheiten der folgenden Formel (I)

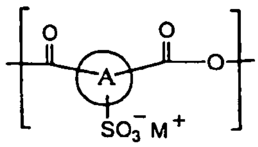 (I)

wobei

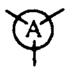 = 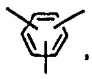, 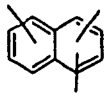, 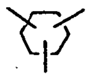, 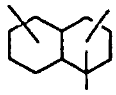 oder 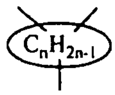

worin n ein eine Ganzzahl von 3 bis 10 ist, und wobei
$M^+$ ein Alkalimetall-Ion, ein Erdalkali-Metallion, ein Phosponium-Ion oder ein Ammonium-Ion ist, und
wobei das Polyester weniger als 5 Gew.-% von Diethylen-Glycol enthält, und
wobei das Polyester $Na_2HPO_4$ in so einer Menge enthält, dass der Phosphorgehalt zwischen 10 bis 200 ppm (basierend auf dem Gewicht des Polyesters) beträgt, und wobei das Polyester entweder frei ist von, oder nicht mehr als 9 ppm von $NaH_2PO_4$ enthält, und
wobei die intrinsische Viskosität zwischen 0,6 bis 1,0 ist oder beträgt.

**2.** Vorformling oder Container nach Anspruch 1, worin

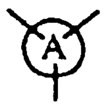 = 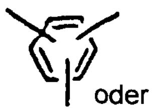 oder 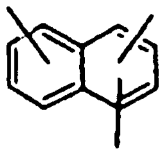

**3.** Vorformling oder Container nach Anspruch 1, worin

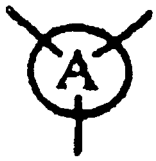 = 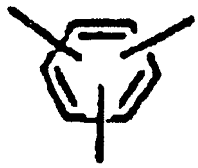

**4.** Vorformling oder Container nach Anspruch 2 oder 3, wobei die Anfügungen zu dem Phenyl-Ring in 1-, 3- und 5-Position stehen und die Anfügung zu dem Naphtyl-Ring in 2-, 4- und 6-Position liegt.

**5.** Vorformling oder Container nach einem der Ansprüche 1 bis 4, wobei $M^+$ entweder $Li^+$, $Na^+$ oder $K^+$ ist.

**6.** Vorformling oder Container nach einem der Ansprüche 1 bis 5, wobei das $Na_2HPO_4$ (Dinatrium Mono-Hydrogenphosphat) in der Form eines Dodeka-Hydrats (•12 $H_2O$) vorliegt.

**7.** Vorformling oder Container nach einem der Ansprüche 1 bis 6, wobei das NSR des Polyesters (Polyesterharzes) kleiner als 10 ist.

**8.** Vorformling oder Container nach einem der Ansprüche 1 bis 7, wobei die Halbzeit der Kristallisation des Polyester-Kunststoffs größer als 150 sec bei 200°C ist.

**9.** Container nach einem der Ansprüche 1 bis 8, mit einem in Längsrichtung gemessenen Streck- oder Dehnungsverhältnis (stretch ratio, $SR_L$) kleiner als 4, und/oder ein Ring/Umfangs-Dehnungsverhältnis (hoop stretch ratio, $SR_H$) kleiner als 3 aufweist, und/oder ein planares Streck- oder Dehnungsverhältnis (SR) kleiner als 12, bevorzugt kleiner als 10 aufweist.

**10.** Container nach einem der Ansprüche 1 bis 9, und mit einem Füllvolumen von kleiner oder gleich 1 liter, insbesondere kleiner oder gleich 0,6 1, und weiter insbesondere kleiner oder gleich 0,5 l.

**11.** Verfahren zum Herstellen eines Containers durch bi-axiales Dehnen oder Recken eines Vorformlings nach einem der Ansprüche 1 bis 8 in einer Form.

**12.** Verfahren nach Anspruch 11, wobei der Vorformling bi-axial gereckt oder gedehnt wird, mit einem Längs-Dehnungsverhältnis ($SR_L$) kleiner als 4, und/oder mit einem Ring/Umfangs-Dehnungsverhältnis ($SR_H$) kleiner als 3, und/oder mit einem planaren Dehnungsverhältnis (SR) weniger als 12, bevorzugt weniger als 10.

**13.** Verfahren nach Anspruch 11 oder 12, wobei der Vorformling bi-axial gedehnt oder gereckt wird, um einen Behälter mit einem kleinen Volumen zu bilden, welcher ein Füllvolumen von kleiner oder gleich 11, speziell kleiner oder gleich 0,61 und noch spezieller kleiner oder gleich 0,51 hat.

## Revendications

**1.** Préforme ou container rigide fabriqué à partir d'au moins une résine polyester comprenant au moins 85 % en moles de polyéthylène téréphtalate et au moins 0,01 % en moles, mais pas plus de 5,00 % en moles de motifs de formule (1)

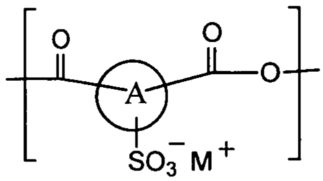

(I)

où

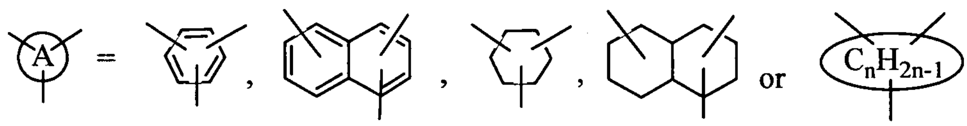

où n est un nombre entier de 3 à 10 et où :

$M^+$ est un ion de métal alcalin, un ion de métal alcalino-terreux, un ion phosphonium ou un ion ammonium et où le polyester contient < 5,0 % en poids de diéthylèneglycol et

où le polyester contient $Na_2HPO_4$ dans une proportion telle que la teneur en phosphore soit de 10 à 200 ppm (par rapport au poids du polyester) et dans laquelle le polyester ne contient pas, ou bien ne contient pas plus de 9 ppm de $Na_2HPO_4$, et

où dans laquelle la viscosité intrinsèque est de 0,6 à 1,0.

**2.** Préforme ou container selon la revendication 1, dans lequel

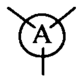 = 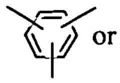 or 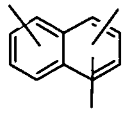

**3.** Préforme ou container selon la revendication 1, dans lequel

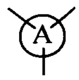 = 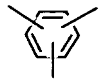

**4.** Préforme ou container selon la revendication 2 ou 3, dans lequel les points d'attache au noyau phényle sont en position 1, 3 et 5 et les points d'attache au noyau naphtyle sont en position 2, 4 et 6.

**5.** Préforme ou container selon l'une des revendications 1 à 4, dans lequel $M^+$ est $Li^+$, $Na^+$ or $K^+$.

**6.** Préforme ou container selon l'une des revendications 1 à 5, dans lequel le $Na_2HPO_4$ (monohydrogénophosphate de disodium) est sous forme dodécahydrate ($.12H_2O$).

**7.** Préforme ou container selon l'une des revendications 1 à 6, dans lequel le NSR de la résine polyester est < 10.

**8.** Préforme ou container selon l'une des revendications 1 à 7, dans lequel le demi-temps de cristallisation de la résine polyester est > 150 s à 200°C.

**9.** Container selon l'une des revendications 1 à 8, ayant un rapport d'étirage longitudinal ($SR_L$) inférieur à 4, et/ou un rapport d'étirage du radial ($SR_H$) inférieur à 3, et/ou un rapport d'étirage planaire (SR) inférieur à 12, et de préférence inférieur à 10.

**10.** Container selon l'une des revendications 1 à 9, et ayant un volume de remplissage inférieur ou égal à 1 L, particulièrement inférieur ou égal à 0,6L, et plus particulièrement inférieur ou égal à 0,5L.

**11.** Procédé de fabrication d'un container en étirant bi-axialement dans un moule une préforme selon l'une des revendications 1 à 8.

**12.** Procédé selon la revendication 11 dans lequel la préforme est étirée bi-axialement avec un rapport d'étirage longitudinal ($SR_L$) inférieur à 4, et/ou avec un rapport d'étirage radial ($SR_H$) inférieur à 3, et/ou avec un rapport d'étirage planaire (SR) inférieur à 12, et de préférence inférieur à 10.

**13.** Procédé selon la revendication 11 ou 12 dans lequel la préforme est étirée bi-axialement en sorte de former un container de faible volume ayant un volume de remplissage inférieur ou égal à 1 L, particulièrement inférieur ou égal à 0,6L, et plus particulièrement inférieur ou égal à 0,5L.

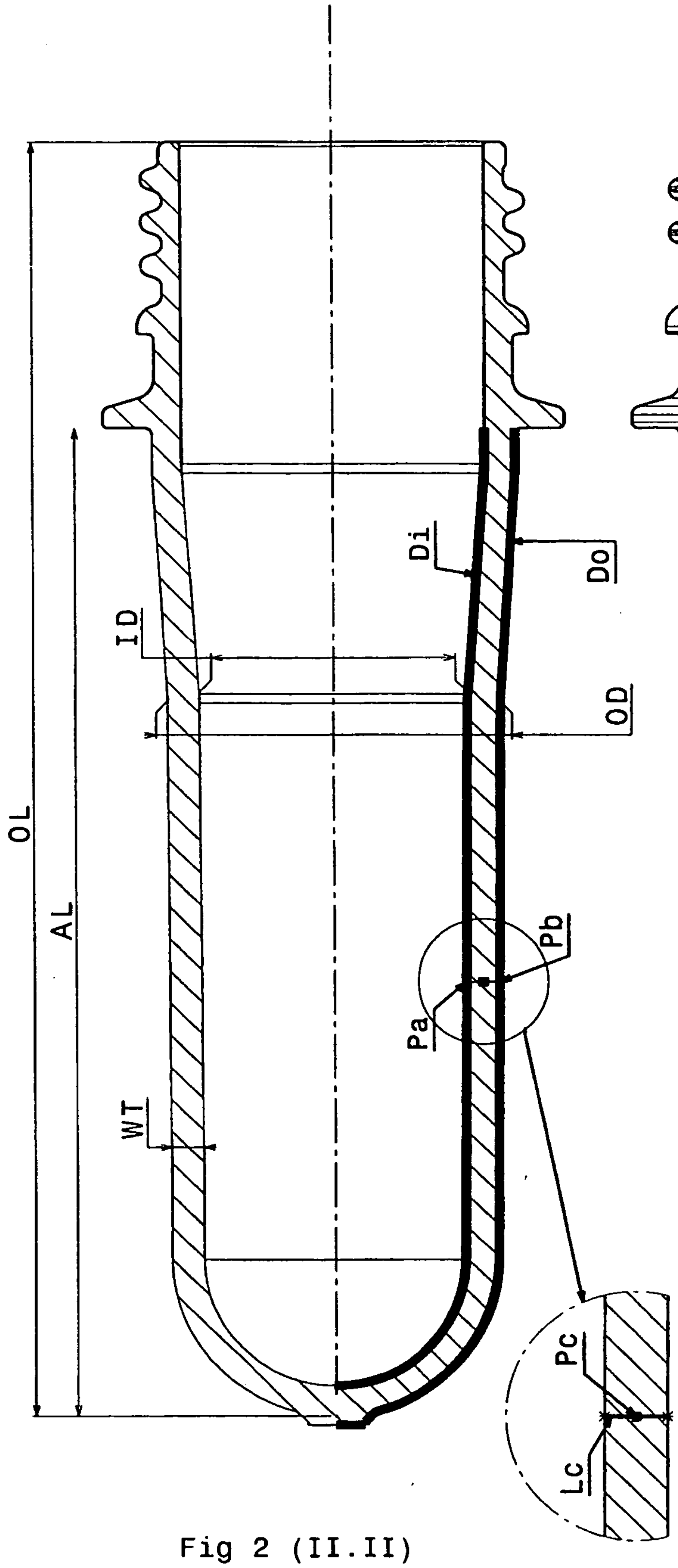


Fig 2 (II.II)

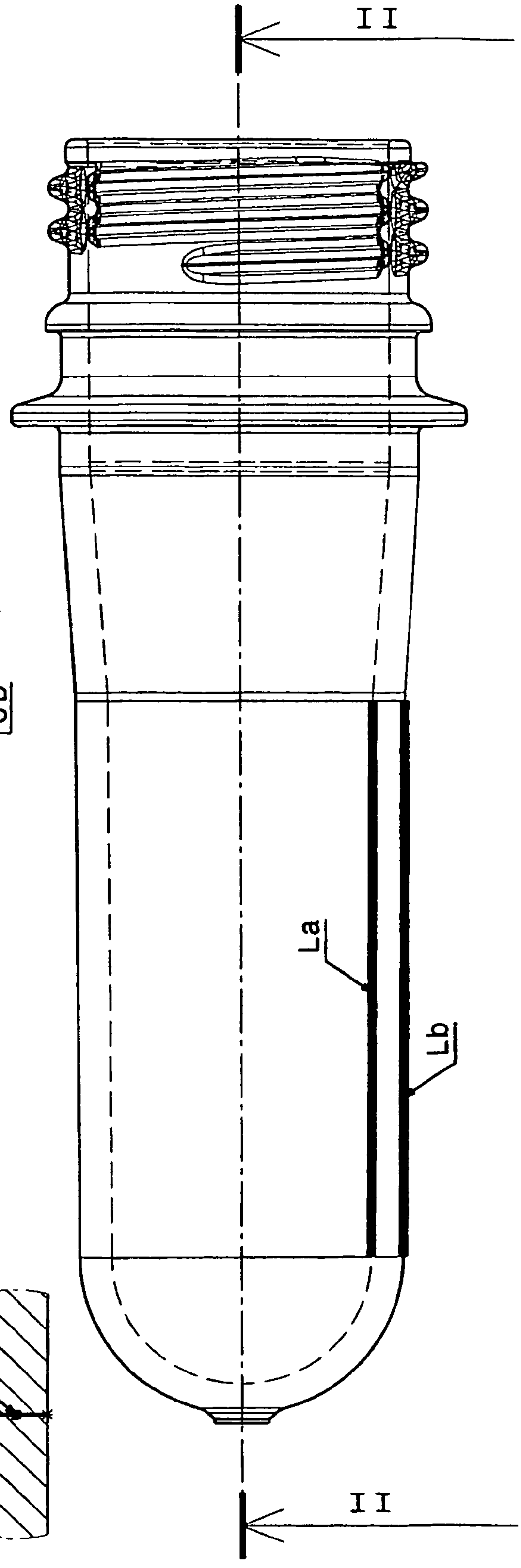


Fig 1

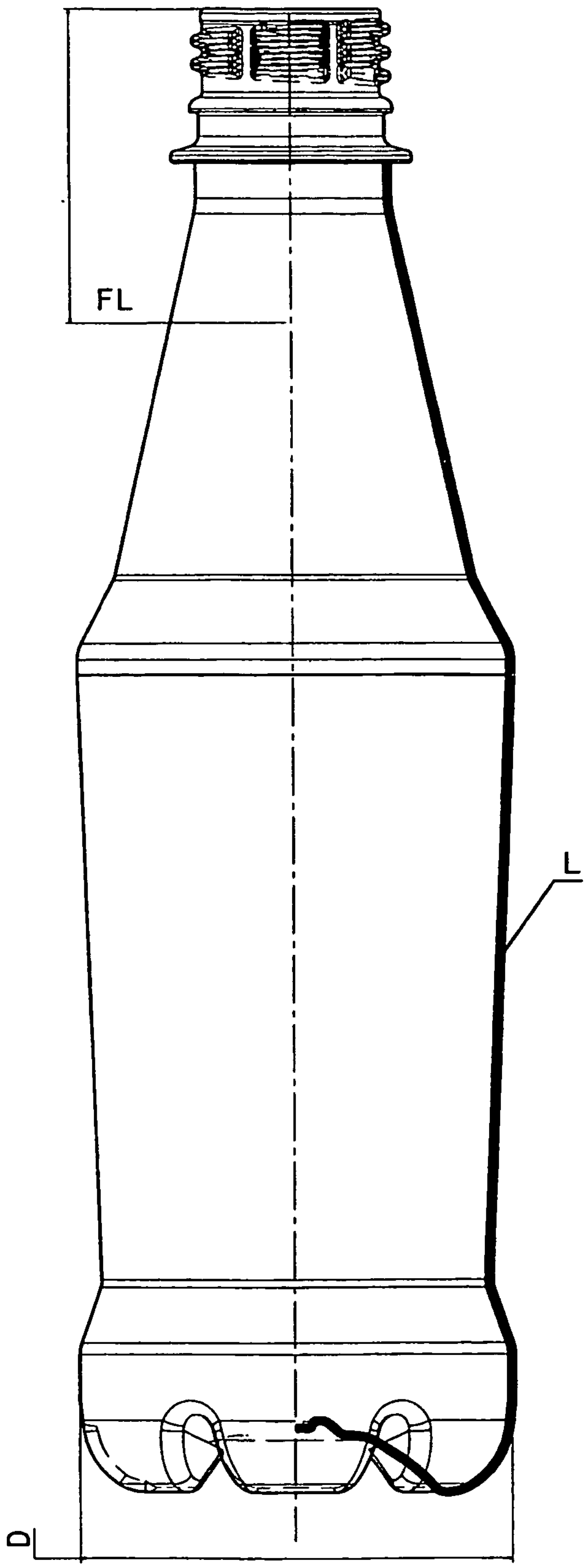


Fig 3 - Bottle A

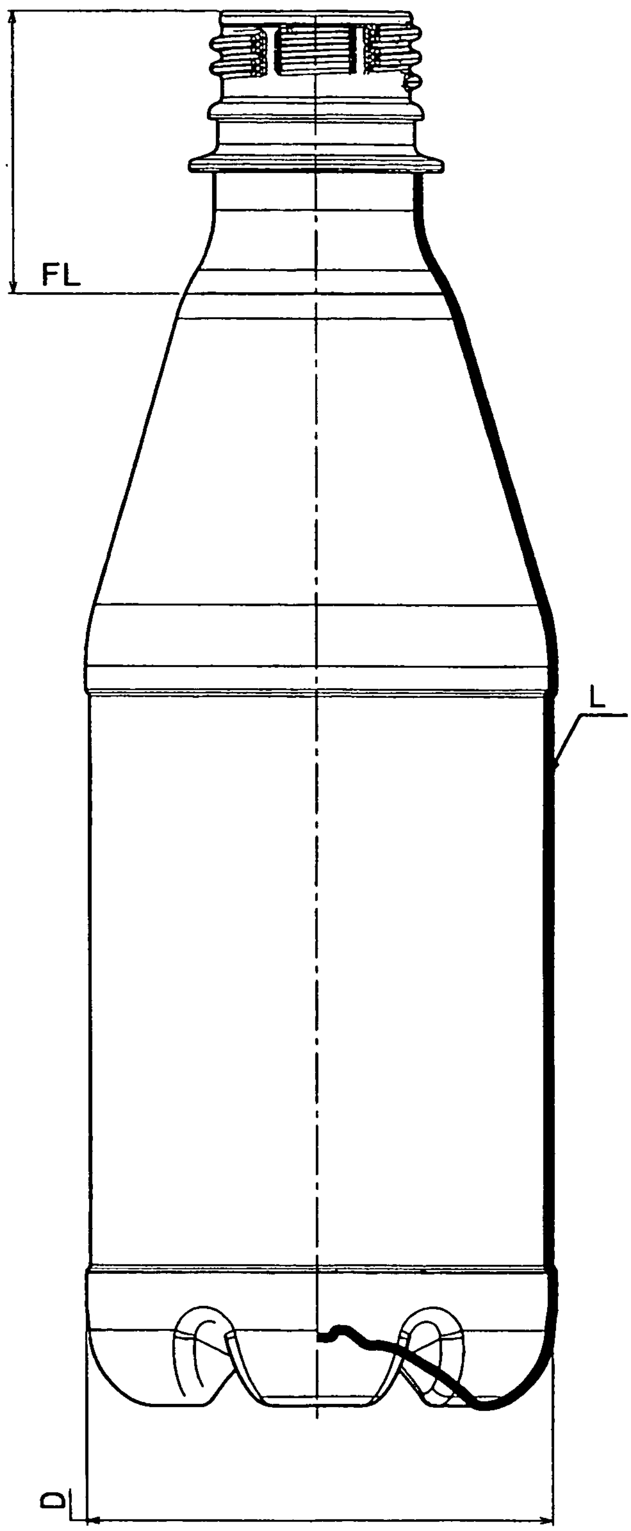


Fig 4- Bottle B

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4499262 A
- US 4579936 A
- JP 6099475 A
- US 5399595 A
- EP 0909774 A
- US 4002667 A
- US 5608032 A
- JP 59093723 A